# EUROPEAN PATENT SPECIFICATION

(11) **EP 2 254 954 B1**
(45) Date of publication and mention of the grant of the patent: **26.09.2018**
(21) Application number: 09723778.8
(22) Date of filing: 30.03.2009
(51) Int. Cl.: C09C 1/42, C01B 33/44

(54) **A PARTICLE WITH BIPOLAR TOPOSPECIFIC CHARACTERISTICS AND PROCESS FOR PREPARATION THEREOF**
TEILCHEN MIT BIPOLAREN TOPOSPEZIFISCHEN CHARAKTERISTIKA UND VERFAHREN ZU DESSEN HERSTELLUNG
PARTICULE DOTÉE DE PROPRIÉTÉS TOPOSPÉCIFIQUES BIPOLAIRES ET SON PROCÉDÉ DE PRÉPARATION

(30) Priority: 28.03.2008 IN MU06682008; 11.09.2008 EP 08164175
(43) Date of publication of application: 01.12.2010
(73) Proprietor: Unilever N.V., 3013 AL Rotterdam (NL); Unilever PLC, London, Greater London EC4Y 0DY (GB)
(72) Inventor: BHATTACHARYA, Suman, K., Bangalore 560 066 (IN); BHATTACHARYYA, Tapomay, Bangalore 560 066 (IN); DASTIDAR, Sudipta, G., Bangalore 560 066 (IN); NAIK, Vijay, M., Maharashtra (IN); SRIVASTAVA, Anuj, Bangalore 560 066 (IN); VAIDYA, Ashish, A., Bangalore 560 066 (IN)
(74) Representative: Fijnvandraat, Arnoldus
(86) International application number: PCT/EP2009/053707
(87) International publication number: WO 2009/118421

(56) References cited:
- EP-A- 0 927 748
- GB-A- 867 752
- US-A- 2 697 699
- US-A- 2 982 665
- US-A- 3 211 565
- US-A- 5 527 430

## Description

### Technical Field

This invention relates to particles with bipolar topospecific characteristics and process of preparation thereof.

### Background and Prior Art

Any discussion of the prior art throughout the specification should in no way be considered as an admission that such prior art is widely known or forms part of the common general knowledge in the field.

Particles with asymmetric distribution of exposed surface chemical groups have been postulated to have numerous potential applications in various fields. Such asymmetric particles need significantly higher supply of energy for desorption from liquid-liquid or gas-liquid interfaces, and consequently, such particles are predicted to be more efficient emulsion and/or foam stabilizers in terms of concentration or loading of particles as well as longevity of emulsions they form, as compared with particles with isotropically distributed surface chemical groups. Such asymmetric particles are predicted to have ability to orient themselves in electric/magnetic fields, to be used for dual-functionality or in stimulus-responsive devices and to be used as building blocks for supraparticular assemblies etc.

The strategies to synthesise such particles with bipolar surface characteristics can be broadly divided into two categories viz., (a) monolayer methods, and (b) bulk methods.

The monolayer method is a toposelective surface modification method where one half of a homogenous particle is protected and a controlled reaction is performed on the exposed surface. The reported strategies are: (i) the temporary masking of one hemisphere during the surface modification of the other one, (ii) the use of reactive directional fluxes or fields such that the particle screens the face which is to be protected, (iii) microcontact printing, (iv) partial contact with a reactive medium along an interface assuming that the particle is unable to rotate during the procedure.

Typically, in monolayer approach, the particles with anisotropically distributed surface chemical groups are prepared from precursor particles that have no surface anisotropy, by toposelective surface modification. Examples of design and synthesis of such particles using the above strategy are described in a review by Perro et al, J. Material Chem., 2005, 15, p3745-3760. One of the approaches used in the past is disclosed in US4715986 (Th. Goldschmidt AG, 1987) which describes particles for stabilizing or destabilizing emulsions of a size less than 100 microns, comprising fragments having on one side thereof hydrophilic group and on the other side thereof hydrophobic groups such that the hydrophilic and the hydrophobic groups are anisotropically distributed in a non-statistical manner. One of the methods for obtaining such fragments is by communition of hollow microspheres. In all the methods that are described, precursor materials have homogeneous distribution of surface groups, e.g. silica, alumina, hollow microspheres, microgel, carbon and starch. Processes starting with asymmetric particles such as 1:1 clays are not described.

Further, monolayer methods for preparation of such asymmetric particles typically start by assembling precursor particles at gas-liquid, liquid-liquid or solid-gas interfaces. Particles at the interfaces are then treated toposelectively from one side of the interface. The scale-up of such methods are therefore limited by interfacial area that can be generated. Further, the rotation of the particles at the interface needs to be arrested to ensure toposelectivity of the treatment.

A few bulk methods to synthesise particles with bipolar surface characteristics have also been reported. In one of the approaches, preformed core-shell nanoparticles are forced into phase separation, simultaneously or subsequently, to a chemical reaction with one component. For example, silver-silica (Ag-SiO2) core shell nanoparticles were subjected to reaction with molecular iodine which is a strong oxidant for silver. This resulted in phase separation of the silver core from the silica shell whilst the core was still attached to the shell forming a snow-man like particles. In another example, nanoparticles with bipolar surface characteristics were synthesized based on the controlled nucleation and growth of a single particle onto the surface of a precursor. While in another example supramolecular particles (dendrimers) were synthesied employing a bottom up approach where macromolecules were synthesised possessing fractal like arrangement.

However, in conventional bulk methods, the yield of particles with bipolar surface characteristics is relatively low and methods are suitable for lab-scale preparation only. Further, the conventional methods are relatively more expensive. There is a lack of robust and reliable method that can be adapted for large scale production of particle with bipolar topospecific characteristics in a cost-effective manner.

On the other hand, several methods are known for production of organo-clays or organic-inorganic hybrid materials with clays as precursor material. However there is no report of bipolar surface characteristics of such organo-modified clay particles.

Gardolinski and Lagaly (Clay Minerals, 2005, 40 p 537-546) describes synthesis of grafted derivatives of kaolinite. By esterification of inner surface hydroxyl groups of kaolinite by alcohols, starting with dimethyl sulfoxide intercalated clay. It is essential in these processes to use pre-intercalated kaolinite. Itagaki and Kuroda (J Material Chem., 2003, 13, p 1064-1068) describe organic modification of the interlayer surface of kaolinite with propanediols by transesterification. Methoxy-modified kaolinite is used as a starting material and reacted with propanediols to prepare hydroxypropoxy modified kaolinites. These references describe 1:1 clay as starting material. However, the grafting agents are small organic molecules with less than 4 carbon atoms and consequently, the resulting particles do not have anisotropically distributed hydrophilic and hydrophobic groups in a non-statistical manner.

Other documents report the coating of inorganic particles, such as clay particles. Such coatings can be polar or a-polar dependent on the coating material, such as e.g. GB 867,752 or EP-A-927 748. In these publications, clay merely acts as a carrier. Another example of a disclosure of coated particles is US 3,211,565, wherein clay particles are disclosed (kaolinite) that are first coated with an organic diamine and then coated with a fatty acid to provide a hydrophobic organophilic particulate material which is capable of universal application in organic non-polar media as well as intermediate polar materials. However, although such treatment makes the particle suitable for use in non-polar media, it renders the particles unsuitable for use in polar materials, as they can no longer be dispersed in a polar medium.

In view of the limitations in the prior art, one of the objects of the present invention is to overcome or ameliorate at least one of the disadvantages of the prior art, or to provide a useful alternative.

Another object of the present invention is to provide a particle with bipolar topospecific characteristics with two spatially distinct regions on its surface having non-identical surface characteristics.

Yet another object of the present invention is to provide a particle with bipolar topospecific characteristics with two spatially distinct regions on its surface where one of said distinct surfaces is hydrophilic and the other distinct surface is hydrophobic.

Yet another object of the present invention is to provide a particle with bipolar topospecific characteristics that is capable of emulsifying at relatively low concentration.
Yet another object of the present invention is to provide a particle with bipolar topospecific characteristics that is capable of providing relatively more stable emulsion at relatively low particle loading.

Yet another object of the present invention is to provide a robust and reliable process of production that can be used for large scale production of particle with bipolar topospecific characteristics with two spatially distinct regions on its surface having non-identical surface characteristics.

Yet another object of the present invention is to provide a particle with properties similar to those of a high HLB surfactants, suitable for use in the preparation of oil-in-water emulsions.

It is known that nanosized or microsized particles can stabilize emulsions and can form surfactant-free emulsions. However, such emulsions require relatively high loading of solid particles. Further, the emulsions are relatively less stable.

The present inventors have surprisingly found that particles prepared by topospecific treatment of an asymmetric clay precursor with an organyl or an organoheteryl group attached to coordinating cations of one of the surface sheets, provides a particle with bipolar topospecific characteristics with two spatially distinct regions on its surface having non-identical surface characteristics.

### Summary of the Invention

According to the present invention, there is provided a particle with bipolar topospecific characteristics, whose precursor is an asymmetric 1:1 or 2:1:1 clay particle having alternating tetrahedral and octahedral sheets terminating with a tetrahedral sheet at one external surface plane and an octahedral sheet at another external surface plane, wherein a chemical group, having greater than 3 carbon atoms, and selected from an organyl or an organoheteryl group, is attached to coordinating cations on the exterior side of one of the surface sheets.

According to another aspect of the present invention, there is provided a process for preparing particle with bipolar topospecific characteristics, whose precursor is an asymmetric 1:1 or 2:1:1 clay particle having alternating tetrahedral and octahedral sheets terminating with a tetrahedral sheet at one external surface plane and an octahedral sheet at another external surface plane, comprising the steps of:
a. treating the precursor with a mineral acid,
b. adding an alkali to increase the pH above 8,
c. adding an alkali metal salt of C10-C22 caroboxylic acid at a temperature from 50 to 150 °C,
d. adding a mineral acid to reduce pH below 7, and;
e. separating the solid product comprising the particle with bipolar topospecific characteristics.

### Detailed Description of the Invention

### Precursor

The precursor of the particle with bipolar topospecific characteristics according to the present invention is preferably an asymmetric 1:1 or 2:1:1 clay particle having alternating tetrahedral and an octahedral sheets terminating with a tetrahedral and an octahedral sheet at exterior surface planes. Particle of 1:1 clay is particularly preferred as precursor.

1:1 clays preferred according to the present invention include kaolinite and serpentine subgroups of minerals. The species included within kaolinite subgroup are kaolinite, dickite, halloysite and nacrite. 1:1 clay from kaolinite subgroup, i.e. selected from kaolinite, dickite, halloyside or nacrite, is particularly preferred.

The species included within serpentine subgroup are chrysolite, lizardite, and amesite.

2:1:1 clays preferred according to the present invention include chlorite group of minerals. Chlorite is also referred as 2:2 clay by some mineralogists. The chlorite comprises tetrahedral-octahedral-tetrahedral sheets like 2:1 clays, with extra weakly bound brucite like layer between tetrahedral layers.

The tetrahedral sheet preferably comprises coordinating tetrahedral cation of silicon. The tetrahedral sheet may also comprise isomorphously substituted coordinating tetrahedral cations which are not silicon. Isomorphously substituted coordinating tetrahedral cations include, but are not limited to, cations of aluminium, iron or boron.

The octahedral sheet preferably comprises coordinating octahedral cation of aluminium. The octahedral sheet may also comprise isomorphously substituted coordinating octahedral cations which are not aluminium. Isomorphously substituted coordinating octahedral cations include cations of magnesium or iron.

It is preferred that the chemical group is attached to the coordinating cations on the exterior side of one of the external surface sheets. Accordingly, the chemical group is attached to coordinating cations on the exterior side of the tetrahedral sheet. Alternatively, the chemical group is attached to coordinating cations on the exterior side of the octahedral sheet. According to a preferred aspect, coordinating cations on the exterior side of each of the tetrahedral and the octahedral surface sheets are attached to the chemical group, with the proviso that the chemical group attached to the coordinating cations on the exterior side of the tetrahedral surface sheet is not identical to the chemical group attached to the coordinating cations on the exterior side of the octahedral surface sheet.

The chemical group is preferably not attached to coordination cations of non-surface tetrahedral or octahedral sheets or on the interior side of the surface sheets.

### Organyl or organoheteryl group

The term organyl group as used herein means any organic substituent group, regardless of functional type, having one free valence at carbon atom. The term organic substituent includes all chemical groups comprising one or more carbon atoms.

The term organoheteryl group as used herein means any univalent group containing carbon having its free valence at an atom other than carbon. The term organoheteryl group includes organosilyl and organosiloxanyl chemical groups. According to a preferred aspect, the organoheteryl group is attached to the coordinating cations by fulfilment of its free valency at an atom selected from oxygen, nitrogen, sulphur, phosphorous, or silicon.

The chemical group has greater than 3 carbon atoms and is preferably selected from -R, -O-R, -SO₄-R, -N(X₁)-R, -O-PO₃(X₁)-R, -O-C(O)-R, -Si(X₁X₂)-R, and-O-Si(X₁X₂)-R, where X₁ and X₂ are selected from a group consisting of H,-(CH₂)ₙ-CH₃, Cl, Br, I, and n is from 0 to 15, and -R is an organyl group.

According to the present invention, an organyl or organoheteryl group is attached to coordinating cations on the exterior side of one of the surface sheets. It is envisaged that more than one organyl or organoheeryl groups can be attached to one of the surface sheets. The organyl or organoheteryl group may be attached to coordinating cations of the tetrahedral surface sheet. Alternatively, the organyl or organoheteryl group may be attached to coordinating cations of the octahedral surface sheet. After the attachment of the chemical group to coordinating cations on the exterior side of one of the surface sheets, the coordinating cations on the exterior side of the other surface sheet are attached to a second chemical group. The second chemical group can be any chemical moiety. It is preferred that the second chemical group is selected from an inorganic chemical group or an organyl or organoheteryl chemical group. Some non-limiting examples of the second chemical group include -NO3, -NH3, -SO3, -SO4, -CH3, and -CH2-CH3.

It is preferred that the coordinating cations of tetrahedral surface sheet are attached to an organoheteryl group which is silane with free valency at oxygen.

### Particle with bipolar topospecific characteristics

Particle with bipolar topospecific characteristics, with anisotropically distributed surface chemical group due to attachment of the organyl or the organoheteryl group to coordinating cations of tetrahedral or octahedral surface sheets, has at least one spatially distinct region on its surface having surface characteristics distinct from the rest of the particle. The particle with bipolar topospecific characteristics may have two distinct regions on its surface having non-identical surface characteristics. It is particularly preferred that the particle has two spatially distinct exterior faces having distinct surface characteristics. It is envisaged that by selecting specific organyl and/or organoheteryl group, and selectively attaching them to coordinating cations of tetrahedral and/or octahedral surface sheets, it is possible to impart anisotropic characteristics of various types to the surface of particle with bipolar topospecific characteristics . The anisotropy or asymmetry of surface characteristic includes, but is not limited to, hydrophobicity, electric charge density, colour, fluorescence, piezo-response, and magnetic property.

### Particle with anisotropic hydrophobicity

It is preferred that the particle has two spatially distinct exterior faces having distinct surface characteristics wherein one of the distinct exterior faces is hydrophilic and the other distinct exterior face is hydrophobic.

The group -R is -R₁ such that any one of the parent molecule of the form X₃-R₁ has a surface energy in the range of 10 to 60 ergs/cm² where X₃ is selected from H, OH, phenyl, O-CH₃, Cl, Br or I. Without wishing to be limited by theory, it is believed that the when the surface energy of the parent molecule X₃-R₁ is between 10 to 60 ergs/cm2, and when an organyl group -R₁ or an organoheteryl group containing -R₁ is attached to coordinating cations of one of the surface sheets, that surface of the particle with bipolar topospecific characteristics is imparted selectively with hydrophobic characteristics.

Alternatively, the group -R is -R₂ such that any one of the parent molecule of the form X₃-R₂ has a value of distribution coefficient or log D of less than or equal to zero at pH of 7 where X₃ is selected from H, OH, phenyl, O-CH₃, Cl, Br or I.

The term Log D as used herein mean the ratio of the equilibrium concentrations of all species (unionized and ionized) of a molecule in octanol to same species in the water phase at a given temperature, normally 25° C. log D differs from Log P in that ionized species are considered as well as the neutral form of the molecule.

According to a preferred aspect, coordinating cations on the exterior side of one of the surface sheets are attached to a chemical group where -R is -R₁ and coordinating cations on the exterior side of the other surface sheet are attached to a group where -R is -R₂.

It is preferred that the organyl or organoheteryl group has greater than 3, more preferably greater than 8 and most preferably greater than 20 carbon atoms. Without wishing to be limited by theory, it is believed that hydrophobicity of the surface increases with the increase in number of carbon atoms. The number of carbon atoms in the organyl or organoheteryl group is preferably from 8 to 30, more preferably from 10 to 22 and most preferably from 12 to 18, or even from 14 to 18.

The use of small organyl or organoheteryl groups is not preferred as these groups are small enough to bind inside the inter lamellar spaces; not only on the exterior surface. This happens in particular with organyl or organoheteryl groups having 3 or less carbon atoms.

Particles with one surface having hydrophobic character and the remaining surface having hydrophilic character according to the present invention are useful in several applications involving aggregation of particles at interfaces such as gas-solid, gas-liquid, liquid-liquid and solid-liquid interfaces. The particle with bipolar topospecific characteristics of the present invention are particularly useful for stabilizing foam and emulsions.

These particles are particularly suitable as an alternative to high-HLB surfactants; and are able to form oil-in-water emulsions regardless of whether the particles are first suspended in an oil phase and then in an aqueous phase or vice versa. Particles having only one polarity, being either polar or apolar (such as untreated clays or organo-clays respectively) will result in an emulsion wherein the continuous phase is the phase wherein the particle is first dispersed (as reported by B.P. Binks et al, Europhys Lett, 16, 53 (1991) and B.P. Binks, Curr, Opin, Colloid, Interface Sci, 7, 21, (2000)).
Without wishing to be bound by any particular theory, it is well know for molecular surfactant systems that the nature of emulsion formation depends on the extent of packing which in turns determines the nature of curvature of the emulsions. The packing of molecular surfactants at an interface is a function of the hydrophobic and hydrophilic group on the molecule which is usually represented in terms of the hydrophilic lipophillic balance (HLB) number. A surfactant with high HLB number will always result in oil-in-water emulsions to maximise the contact of its bulky hydrophilic group with the water phase. Thus the geometry of the molecule plays an important role in determining the nature of emulsions formed by these surfactants.

The particles of the invention, on the other hand, can be envisaged to be a particle analogue of high HLB number surfactants due to their inherent geometry. To elaborate, the dimensions of these particles in the X-Y dimensions are preferably between 100 and 1000 nm, preferably between 400 nm and 600 nm and in Z direction is between 100 nm and 500 nm, preferably more than 150 nm and less than 250 nm. After reaction with a fatty acid one of the surfaces is modified to become hydrophobic. The dimensions (i.e. thickness) of this hydrophobic layer arising due to the reaction with the fatty acid is dependent on the tail length of said fatty acid. For instance, a C18 fatty acid typically give about 2 to 3 nm thickness (calculated based on a straight chain arrangement of the hydrocarbon group). As result of this, one of the side of the particle has an extremely thin hydrocarbon layer while the rest of the particle remain hydrophilic. This is a geometry analogous to high HLB surfactant systems which - according to the theory - is the factor responsible for resulting in oil-in-water emulsions irrespective the initial wetability of the particles.
The particle with bipolar topospecific characteristics of the present invention provide relatively more stable emulsions as compared to untreated particles at same particle loading and require relatively less particle loading to obtain stable emulsions, and are useful as an emulsifying agent. Other advantages of the emulsions obtained using the particles of the present invention include:
a. relatively more tolerance to presence of electrolytes,
b. flexibility of formulating oil-in-water emulsions with relatively high oil phase which allows higher delivery of non-aqueous actives without compromising tactile feel.
c. Relatively higher viscosity and yield stress as compared to untreated particles at same particle loading
d. formation of emulsions with relatively low surfactant concentration, and possibility of making surfactant-free emulsions.

According to another aspect of the present invention there is provided an oil-in-water emulsion comprising water, oil, and particle with bipolar topospecific characteristics of the present invention. The particle with bipolar topospecific characteristics are preferably 0.1-99%, more preferably 1-30%, and most preferably 1-15% by weight of the emulsion.

The toposelectively selected particles according to the present invention provide relatively more stable gas-liquid foams.

### Particle with anisotropic colour

The group -R is -R₃ such that any one of the parent molecule of the form X₃-R₃ has at least one absorbance peak in a polar or a nonpolar solvent at a wavelength from 200 nm to 700 nm. The particle with bipolar topospecific colour characteristics can be advantageously used as sensors for investigating dispersed phase impurities.

### Particle with anisotropic fluorescence

The group -R is -R₄ such that any one of the parent molecule of the form X₃-R₄ has at least one emission peak in a polar or a nonpolar solvent at a wavelength from 200 nm to 700 nm.

### Particle with anisotropic electric charge density

The group -R is -R₅ such that any one of the parent molecule of the form X₃-R₅ has a resitivity more than 0.1 microohm cm.

### Particle with anisotropic piezo-response characteristics

The group -R is -R₆ such that any one of the parent molecule of the form X₃-R₆ has a piezoelectric crystal class selected from 1, 2, m, 222, mm2, 4, -4, 422, 4mm, -42m, 3, 32, 3m, 6, -6, 622, 6mm, -62m, 23, -43m.

### Magnetic property

The group -R is -R7 such that any one of the parent molecule of the form X3-R7 is paramagnetic or diammagenetic.

Some examples of preferred particle with bipolar topospecific characteristics according to the present invention are given below.

### Process

Any chemical reaction or series of reactions wherein an organyl or an organoheteryl chemical group is attached selectively to coordinating cations on the exterior side of either the tetrahedral or the octahedral surface sheet can be used to prepare the particle with bipolar topospecific characteristics according to the present invention, when the precursor is an asymmetric clay. The selectivity of the reaction is the essential feature. The chemical reaction or series of reactions wherein the same organyl or organoheteryl group is attached to coordinating cations of both the surface sheets, viz octahedral and tetrahedral, are excluded from the scope of the present invention.

It will be appreciated that the person skilled in the art may choose any reaction or series of reactions to attach an organyl or an organoheteryl chemical group selectively to the coordinating cations of one of the surface sheets to prepare the particle with bipolar topospecific characteristics of the present invention.

A Grignard reagent or an organolithium compound can be used as a reactant attachment of an organyl group to the coordinating cations of the tetrahedral surface sheet.

According to one aspect, there is provided a process for preparing particle with bipolar topospecific characteristics comprising the steps of:
a. treating the precursor clay with a mineral acid,
b. adding an alkali to increase the pH above 8,
c. adding an alkali metal salt of C10-C22 caroboxylic acid at a temperature from 50 to 150 °C,
d. adding a mineral acid to reduce pH below 7, and;
e. separting the solid product comprising the particle with bipolar topospecific characteristics.

The carboxylic acid has preferably, 8-30, more preferably 12-18,, and most preferably 14-16 carbon atoms. The carboxylic acid according to the present invention can be saturated or unsaturated. Unsaturated acids are particularly preferred. Some non-limiting examples of carboxylic acids that can be used include oleic acid and linoleic acid.

In this reaction, an organoheteryl group (fatty acid with free valency at oxygen) is attached to the coordinating cations of the octahedral sheet.

### DESCRIPTION OF DRAWINGS

Figure 1: Fourier transformed infrared (FTIR) differential spectrum of (A) Kaolinite, (B) Silica and (C) Alumina. All three particles were reacted with oleic acid according to the invention.
Figure 2: X-ray spectra of untreated kaolinite particles and the toposelectively treated particles of the invention, showing that no differences have occurred in the inter lamellar space. In the drawing the Toposelective sample is indicated as TS and are scaled on the Y-axis on the left hand side, while the untreated particles are indicated as UT and are scaled on the Y-axis on the right hand side.

### EXAMPLES

The invention will now be demonstrated with help of examples. The examples are for illustration only and do not limit the scope of the invention in any manner.

### Example 1: Emulsion behaviour

### The process of preparation of toposelectively particles

Kaolinite was used as a precursor. One gram of kaolinite (laboratory grade Kaolinite, ex. Loba) was added to 100 ml of 0.1 N hydrochloric acid (ex. Emerck) and the mixture was sonicated in a bath sonicator (ex. Elma Transsonic 460/H sonicator) for 15 minutes. This was followed by addition of 0.4 g of sodium hydroxide pellets to this mixture under constant stirring on a table top magnetic strirrer. After the dissolution of sodium hydroxide pellets the pH of the system was measured using a pH meter (ex Orion, model no. 720A) and found to be 11.5. Excess of sodium oleate (99% purity, ex Loba) was added to the reaction mixture to make a concentration of 90 g/l. The reaction mixture was stirred constantly at 90° C for 2 hours and kept overnight (for 12 hours) to attain equilibrium. The pH of the system was next adjusted to 6.5 by addition of drops of 1 N HCI to convert unreacted soap into its free fatty acid. The reaction mixture was centrifuged and the precipitated clay was repeatedly washed with water and acetone to remove traces of unreacted soap. The reacted clay is dried at 55°C in a hot air oven for 2 hrs to obtain the particle with bipolar topospecific characteristics. It will be appreciated that the process of the present invention does not depend upon the interfacial area and thus is relatively easy to scale up.

The particles of the invention were further compared with coated particles are disclosed in the prior art. The coated clay (kaolinite) material disclosed in US 3,211,556 was synthesized as described in US 3,211,556. The material was further used for the following experiments.

### Characterization of toposlectively treated particles

### Infrared measurements

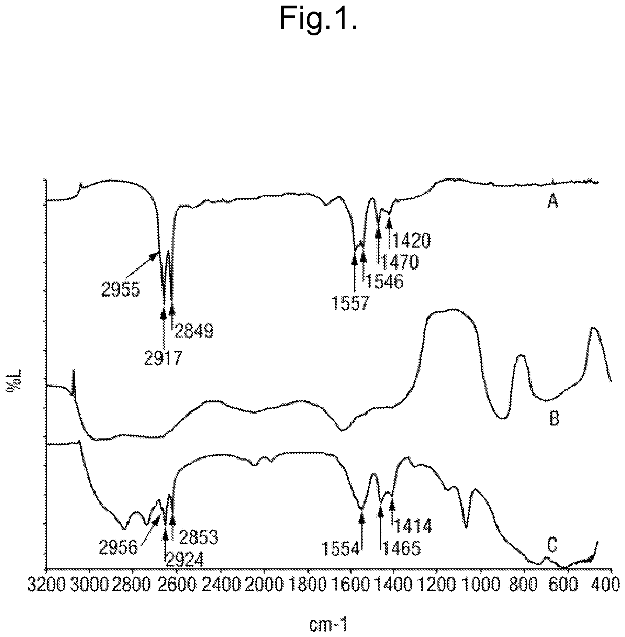

Independent reactions following the same procedure as described above was also performed with alumina (chromatographic grade, ex S.D Fine-chem) and silica (Aerosil 200, ex Degussa) instead of kaolinite were also performed. Aerosil 200 (ex Degussa) and chromatographic grade alumina, Al2O3 (ex S.D Fine-chem) were used as model silica and alumina surfaces respectively. The differential IR spectrum of the three substrates is shown in Figure 1.

Now referring to spectra shown in Figure 1, obtained from Kaolinite and Alumina, the -COOH vibration peak of oleic acid at 1710 cm⁻¹ was replaced by a new set of major peaks at 1550-1570 cm⁻¹ and 1460-1470 cm⁻¹. Asymmetrical stretching near 1650-1550 cm⁻¹ and symmetrical stretching band near 1400 cm⁻¹ is a characteristic feature of carboxylate anion. This indicates that a new compound of aluminium oleate was formed on both Kaolinite and Alumina surfaces through a carboxylate anion. Moreover the two new peaks obtained for both Kaolinite and Alumina were found to be located close to each other suggesting that a bidentate carboxylate complex or a bridging bonding (-COO-AI+3) environment was formed between -COOH in Oleic acid with AI+3 on both Alumina or Kaolinite surface.

In addition to the peaks mentioned above another new set of peaks between 2950-2850 cm⁻¹ appear for Kaolinite and Alumina. These peaks are characteristic of C-H stretching. The asymmetrical and symmetrical stretching of methylene groups occurs, near 2926 and 2853 cm⁻¹ respectively. The positions of these bands do not vary more than ± 10 cm⁻¹ in the aliphatic hydrocarbon series. The occurrence of peaks at 2917 and 2849 cm-1 for Kaolinite and 2924 and 2953 for Alumina originates from the methylene group of the hydrocarbon chain of oleic acid. This further demonstrates that reaction has indeed occurred onto both Alumina and Kaolinite surfaces. The reacted silica on the other hand demonstrates a featureless spectrum. Both the carboxylate anion and the methylene stretching frequencies are notably absent in the case of silica. This indicates that the silica did not participate in the reaction with oleic acid. Thus, in the process described above, an organoheteryl group (fatty acid with free valency at oxygen) is attached to the coordinating cations of the octahedral sheet, i.e., aluminium.

### Emulsification studies

### Preparation of emulsion and evaluation of emulsion stability

0.1 g particles were taken in a 50 mL graduated Tarson centrifuge tube and 5 ml of deionized water (Millipore) was added to it. The mixture was sonicated for 45 minutes in a sonicator bath (SS Microsupersonics). Then 5 ml of LLPO (light liquid paraffin oil, supplied by Raj Petrochemicals) was added to the water-particle mixture and the resulting mix was homogenized using Ultra Turrax T 25 homogenizer for 10 minutes at about 6500 rpm. Volume of oil emulsified was noted initially and 24 hours after. Accelerated stability tests were performed by subjecting the emulsions to low speed and high speed centrifugation (LSC and HSC). Centrifugation was carried out in Remi centrifuge for one minute at about 500 rpm for 1 min (LSC) and also at 4000 rpm for 1 min (HSC). The volume of oil emulsified was noted after LSC as well as HSC.

Emulsions were prepared using particle concentration of about 2% by weight of emulsion and oil and water each about 49% by weight of emulsion. Emulsion were made using particle with bipolar topospecific characteristics of the present invention (Example 1), unreacted Kaolinite (Comparative Example 1-A), organoclays (Amshine-Kaolinite treated with Amino silane treated hydrous clay obtained from English India China Clay) (Comparative Example 1-B) and hydrophobic silica (Degussa Aerosil R974) (Comparative Example 1-C).

**Table 1 - Stability of emulsions and ease of preparation**

| Example No | Particle | Size (micron) | Oil emulsified after high speed centrifugation (%) | Handling of precursor | Ease of mixing |
|---|---|---|---|---|---|
| 1 | Toposelectively treated | 0.5 | 20 | Easy | Good |
| A | Untreated | 0.5 | 0 | Easy | Good |
| B | Organoclay | 0.5 | 10 | Difficult | Poor |
| C | Hydrophobic silica | 0.012 | 60 | Difficult | Poor |
| D | Particle as per US 3,211,565 | 0.5 | 0 | Difficult | Poor |

Emulsions comprising untreated particles and organoclay are relatively unstable whilst the emulsion comprising hydrophobic silica, whilst being relatively stable, are quite difficult to form as the hydrophobic silica, due to its low particle size, is a potential respiratory hazard and can not be handled with ease. Further, being hydrophobic, it is quite difficult to mix silica to form an emulsion. From the results, it is clear that the particle with bipolar topospecific characteristics of the present invention impart relatively more stability to the emulsion whilst being easy to handle and process.

### Emulsion stability in presence of electrolytes

Emulsions were formed at various concentrations of an electrolyte using the particle with bipolar topospecific characteristics according to the present invention (Example 2-4). Comparative examples 2-A to 4-A, were identical to Examples 2-4 except that untreated clay particles were used instead of the particle with bipolar topospecific characteristics.

**Table 2 - Stability of emulsions in presence of electrolyte**

| Concentration of sodium chloride (M) | | Oil emulsified after HSC (% by volume) - emulsion using particle with bipolar topospecific characteristics | | Oil emulsified after HSC (% by volume) emulsion using untreated particles |
|---|---|---|---|---|
| | Example No | | Example No | |
| 0.001 | 2 | 40 | 2-A | 0 |
| 0.01 | 3 | 60 | 3-A | 0 |
| 0.1 | 4 | 90 | 4-A | 0 |

From the results, it can be seen that the particle with bipolar topospecific characteristic according to the present invention form emulsion which are relatively more tolerant to the presence of electrolyte.

### Emulsion stability in presence of surfactant

All the examples below are at particle loading of 1% by weight of emulsion. Oil and water both are about 49.5 % by volume of the emulsion. The surfactant is 1% by weight of the emulsion.

**Table 3 - Stability of emulsions in presence of surfactant**

| | | Oil emulsified after HSC (% by volume) - emulsion using particle with bipolar topospecific characteristics | | Oil emulsified after HSC (% by volume) emulsion using untreated particles |
|---|---|---|---|---|
| Surfactant at its critical micellar concentration | Example No | | Example No | |
| Alcohol ethoxylate (C12EO7-Galaxy surfactants) | 5 | 50 | 5-A | 0 |
| Alcohol ethoxylate (C12EO3-Galaxy surfactants) | 6 | 40 | 6-A | 0 |
| Linear alkylbenzene sulfonate | 7 | 30 | 7-A | 10 |

It has been already demonstrated that emulsion can be formed in absence of surfactants, using the particle with bipolar topospecific characteristics of the present invention. From the results above, it is clear that at same loading of particles, the emulsions formed using the particle with bipolar topospecific characteristics of the present invention are relatively more stable as compared to corresponding emulsions formed using untreated particles.

### Types of oils that can be emulsified

Emulsions were prepared using particle concentration of about 2% by weight of emulsion and oil and water each about 49% by weight of emulsion. Emulsion were made using particle with bipolar topospecific characteristics of the present invention (Examples 8 and 9), unreacted Kaolinite (Comparative Examples 8-A and 9-A), organoclays (Amshine-Kaolinite treated with Amino silane treated hydrous clay obtained from English India China Clay) (Comparative Example 8-B and 9-B) and hydrophobic silica (Degussa Aerosil R974) (Comparative Example 8-C and 9-C). The oils used and their surface tensions are tabulated below along with the results on emulsion stability.

**Table 4 - Stability of emulsions in presence of surfactant**

| Example No | | Surface tension of oil (mN/m) | | Oil emulsified after low speed centrifugation (%) |
|---|---|---|---|---|
| | Oil | | Particle | |
| 8 | Nitrobenzene | 43.4 | Toposelectively treated | 100 |
| 8-A | Nitrobenzene | 43.4 | Untreated | 70 |
| 8-B | Nitrobenzene | 43.4 | Organoclay | 70 |
| 8-C | Nitrobenzene | 43.4 | Hydrophobic silica | 70 |
| 9 | Hexane | 17.9 | Toposelectively treated | 100 |
| 9-A | Hexane | 17.9 | Untreated | 90 |
| 9-B | Hexane | 17.9 | Organoclay | 90 |
| 9-C | Hexane | 17.9 | Hydrophobic silica | 70 |

From the results, it is clear that the particle with bipolar topospecific characteristics according to the present invention provided emulsions with oils having a broad range of surface tension values. The emulsions made with the particle with bipolar topospecific characteristics of the present invention are relatively more stable as compared to the emulsions made using particles of the prior art.

### Viscosity of emulsion

Emulsion were prepared with 10% particle with bipolar topospecific characteristics by weight of emulsion and oil (light liquid paraffin oil) and water each about 45% by weight of emulsion (Example 10). Comparative example 10-A corresponding to the Example 10 was made by using untreated particles.

The emulsions were made in a test tube. The test tube was then placed in horizontal position, and the amount of emulsion flowing out of tube, and the amount remaining in the tube was noted after 15 minutes. The results are tabulated below.

**Table 5 - Viscosity of emulsions**

| Example No | Particle | Volume of liquid remaining in the tube after 15 minutes (%) |
|---|---|---|
| 10 | Toposelectively treated | 100 |
| 10-A | Untreated | 0 |

From the results, it is clear that the emulsion made using particle with bipolar topospecific characteristics of the present invention has relatively higher yield stress and viscous characteristics as compared to the emulsion made using corresponding untreated particles.

### Foam generation and stability

Foam generation and stability were evaluated for foams generated using particle with bipolar topospecific characteristics (Example 11) and untreated particles (Comparative Example 11-A). Foam was prepared by adding 2 g particles to 10 mL of deionized water and stirring the mixture in high speed homogenizer (Ultratrax make) at 6400 rpm for 10 minutes. Initial volume of foam was measured after stopping the stirring (t = 0). The foam volume was also measured at t = 15 minutes. The results are tabulated below

**Table 6 - Foam generation and stability**

| Example No | Particle | Initial Volume of foam at t = 0 (mL) | Volume of foam at t = 15 minutes (mL) |
|---|---|---|---|
| 11 | Toposelectively treated | 7.5 | 6 |
| 11-A | Untreated | 0 | 0 |

From the results, it is clear that the particle with bipolar topospecific characteristics of the present invention are capable of generating relatively high volume of foam as compared to untreated particles and also provide the foam with relatively higher stability.

### Example 2: Comparison of homogenous and bipolar particles

As explained above, a particle which is ideally bipolar is expected not to show this dependence of the dispersion medium as they will behave like a particulate analogue of a surfactant. To prove whether the particles is bipolar or homogenous following experiments were performed.

### Experimental protocol

0.1 g particles were taken in a 50 mL graduated Tarson centrifuge tube and 5 ml of deionized water (Millipore) was added to it. The mixture was sonicated in a sonicator bath (SS Microsupersonics). Then 5 ml of LLPO (light liquid paraffin oil, supplied by Raj Petrochemicals) was added to the water-particle mixture and the resulting mix was homogenized using Ultra Turrax T 25 homogenizer for 10 minutes at about 6500 rpm.

In another set of experiments instead of dispersing the particles first in the water phase, the particles were dispersed in oil followed by water addition. Rest of the procedure remains same.

In both cases the oil phase was doped with a fluorescent dye, Nile Red (2.24·10⁻⁶ mM) to determine the nature of the continuous phase. It was ascertained that adding this minute amount of the dye does not alter the property of the oil phase like surface tension (0.05mNm-1). Fluorescence microscopy was used to determine the nature of the phases.

### Results

The fluorescence micrographs of these four systems are presented below (Table 7). It is observed that these micrographs that emulsions formed with the particles of the invention always results in a oil-in-water emulsion irrespective of the initial wetability of the particles.

On the other hand the emulsions formed with unreacted particles and particles prepared using US 3,211,565 exhibits a phase inversion depending on the initial wetability of the particles. This behaviour of unreacted particles and other homogenous particles is similar to the observation observed earlier in the literature (B.P. Binks, et al, J Phys Chem Chem Phys, 2, 2959 (2000)) and can be explained considering the difference in contact angle experienced by the particle when it approaches an interface form two different phase, i.e. is contact angle hysteresis. When an homogemous particle approaches the interface form the oil phase it experiences an advancing contact angle (measured into water) whereas when it approaches from a water phase a receding contact angle is established (as measured form water phase).

The dimension characteristics of the particles of the invention were in the X-Y dimensions: ∼ 500 nm and in Z direction: ∼200 nm. After reaction with oleic acid one of the surfaces is modified to become hydrophobic due to a oleic acid layer of ∼2 to 3 nm (calculated based on a straight chain arrangement of the hydrocarbon group).

As result of this one of the sides of the particle has extremely thin of hydrocarbon layer while the rest of the particle remains hydrophilic. This is a geometry analogous to high HLB surfactant systems which is probably the factor responsible for resulting in oil-in-water emulsions irrespective the initial wetability of the particles.

**Table 7. Nature of emulsions formed with particles initially dispersed either in oil or water phase.**

| | Emulsion type when first dispersed in water | Emulsion type when first dispersed in oil |
|---|---|---|
| Toposelective particle | Oil in water | Oil in water |
| Unreacted particle | Oil in water | Water in oil |
| US 3,211,565 particle | Oil in water | Water in oil |

As demonstrated in the table above, the particles according to the invention form an oil-in-water emulsion regardless of whether the emulsification process started with suspending the particles first in water and then mixed with an oil phase, or first in oil and then mixed with water. Untreated particles or coated particles (like the particles of US 3,211,565) form an emulsion, having a continuous phase that is the phase wherein they are first dispersed.

This shows that the untreated particles and the coated particles as disclosed in the prior art are not bipolar, but homogenous, while the particles according to the invention are truly bipolar.

### Example 3: d-spacing

In order to demonstrate that the organoyl or organoheteroyl groups are only present on the exterior surface, and not in the inter lamellar space, X-ray diffraction measurements (ex Siemens D500) were performed.

The particles used were the topeselective particles of example 1 and untreated kaolinite clay.

To examine the extent of intercalation of Oleic acid inside the clay lattice, X-ray diffraction measurements were performed on the reacted clay samples to check for the intercalation of oleic acid upon reaction, which is undesirable.

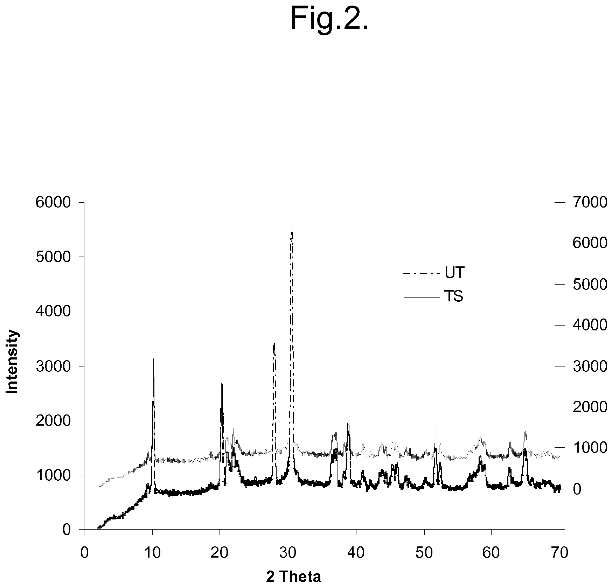

Intercalation results in an increased d-spacing in Kaolinite which is typically 7.4 Å. The X-ray diffractogram of the reacted Kaolinite along with the unreacted one is presented in Figure 2. The characteristic d001 peak of raw kaolinite is observed at 2θ = 12.6° (very intense, sharp and narrow), which corresponds to the 0.74nm, which is commonly know to be typical for kaolinite. No difference between unreacted and the particles of the invention was observed indicating absence of any intercalation of oleic acid within the d-spacing.

## Claims

1. A particle with bipolar topospecific characteristics, whose precursor is an asymmetric 1:1 or 2:1:1 clay particle having alternating tetrahedral and octahedral sheets terminating with a tetrahedral sheet at one external surface plane and an octahedral sheet at another external surface plane, wherein a chemical group, having greater than 3 carbon atoms, and selected from an organyl or an organoheteryl chemical group, is attached to coordinating cations on the exterior side of one of the surface sheets.

2. A particle with bipolar topospecific characteristics as claimed in claim 1 wherein said chemical group is attached to coordinating cations on the exterior side of the tetrahedral surface sheet.

3. A particle with bipolar topospecific characteristics as claimed in claim 1 wherein said chemical group is attached to coordinating cations on the exterior side of the octahedral surface sheet.

4. A particle with bipolar topospecific characteristics as claimed in any one of the preceding claims wherein coordinating cations on the exterior side of each of the tetrahedral and the octahedral surface sheets are attached to said chemical group, with the proviso that the chemical group attached to the coordinating cations on the exterior side of the tetrahedral surface sheet is not identical to the chemical group attached to the coordinating cations on the exterior side of the octahedral surface sheet.

5. A particle with bipolar topospecific characteristics as claimed in any one of the preceding claims wherein said organoheteryl group is attached to said coordinating cations by fulfilment of its free valency at an atom selected from oxygen, nitrogen, sulphur, phosphorous, or silicon.

6. A particle with bipolar topospecific characteristics as claimed in any one of the preceding claims wherein said chemical group is selected from -R, -O-R, -SO₄-R, -N(X₁)-R, -O-PO₃(X₁)-R, -O-C(O)-R, -Si(X₁X₂)-R, and -O-Si(X₁X₂)-R, where -R is an organyl or organoheteryl group, X₁ and X₂ are selected from a group consisting of H, phenyl, -(CH₂)ₙ-CH₃, Cl, Br, I, or an organyl or organoheteryl group that may or may not be same as -R, and n is from 0 to 15.

7. A particle with bipolar topospecific characteristics as claimed in claim 6 wherein said chemical group has greater than 8 carbon atoms.

8. A particle with bipolar topospecific characteristics as claimed in any one of the preceding claims wherein said -R is -R₁ such that any one of the parent molecule of the form X₃-R₁ has a surface energy in the range of 10 to 60 ergs/cm² where X₃ is selected from H, OH, phenyl, -CH₃, O-CH₃, CI, Br or I.

9. A particle with bipolar topospecific characteristics as claimed in claims 1 to 7 wherein said -R is -R₂ such that any one of the parent molecule of the form X₃-R₂ has a value of distribution coefficient or log D of less than or equal to zero at pH of 7 where X₃ is selected from H, OH, phenyl, -CH₃, O-CH₃, Cl, Br or I.

10. A particle with bipolar topospecific characteristics as claimed in claim 8 or claim 9 wherein coordinating cations on the exterior side of one of the surface sheets are attached to a chemical group where -R is -R₁ and coordinating cations on the exterior side of the other surface sheet are attached to a group where -R is -R₂.

11. A particle with bipolar topospecific characteristics as claimed in any one of the preceding claims wherein said particle has two spatially distinct exterior faces having distinct surface characteristics.

12. A particle with bipolar topospecific characteristics as claimed in any one of the preceding claims wherein one of said distinct exterior faces is hydrophilic and the other distinct exterior face is hydrophobic.

13. A particle with bipolar topospecific characteristics as claimed in any one of the preceding claims wherein said -R is -R₃ such that any one of the parent molecule of the form X₃-R₃ has at least one absorbance peak in a polar or a nonpolar solvent at a wavelength from 200 nm to 700 nm where X₃ is selected from H, OH, phenyl, -CH₃, O-CH₃, Cl, Br or I.

14. A particle with bipolar topospecific characteristics as claimed in any one of the preceding claims wherein said -R is -R₄ such that any one of the parent molecule of the form X₃-R₄ has at least one emission peak in a polar or a nonpolar solvent at a wavelength from 200 nm to 700 nm, where X₃ is selected from H, OH, phenyl, -CH₃, O-CH₃, Cl, Br or I.

15. A particle with bipolar topospecific characteristics as claimed in any one of the preceding claims wherein said coordinating cations of octahedral surface sheet are attached to an organoheteryl group which is C10-C22 carboxylic acid with free valency at oxygen.

16. A particle with bipolar topospecific characteristics as claimed in any one of the preceding claims wherein said coordinating cations of tetrahedral surface sheet are attached to an organoheteryl group which is silane with free valency at oxygen.

17. A particle with bipolar topospecific characteristics as claimed in any one of the preceding claims wherein said 1:1 clay is selected from kaolinite, halloysite, dickite, or nacrite.

18. A process for preparing a particle with bipolar topospecific characteristics according to any of the preceeding claims, whose precursor is an asymmetric 1:1 or 2:1:1 clay particle having alternating tetrahedral and octahedral sheets terminating with a tetrahedral sheet at one external surface plane and an octahedral sheet at another external surface plane, comprising the steps of:
a. contacting the precursor with a mineral acid,
b. adding an alkali to increase the pH above 8,
c. adding an alkali metal salt of C10-C22 carboxylic acid at a temperature from 50 to 150 °C,
d. adding a mineral acid to reduce pH below 7, and;
e. separating the solid product comprising the particle with bipolar topospecific characteristics.

## Patentansprüche

1. Teilchen mit bipolaren topospezifischen Eigenschaften, dessen Vorstufe ein asymmetrisches 1:1 oder 2:1:1 Tonteilchen mit alternierenden tetraedrischen und oktaedrischen Schichten, die an einer äußeren Oberflächenebene mit einer tetraedrischen Schicht und an einer anderen äußeren Oberflächenebene mit einer oktaedrischen Schicht enden, ist, wobei eine chemische Gruppe mit mehr als 3 Kohlenstoffatomen und ausgewählt aus einer chemischen Organyl- oder Organoheteryl-Gruppe an koordinierende Kationen an der Außenseite von einer der Oberflächenschichten gebunden ist.

2. Teilchen mit bipolaren topospezifischen Eigenschaften wie in Anspruch 1 beansprucht, wobei die chemische Gruppe an koordinierende Kationen an der Außenseite der tetraedrischen Oberflächenschicht gebunden ist.

3. Teilchen mit bipolaren topospezifischen Eigenschaften wie in Anspruch 1 beansprucht, wobei die chemische Gruppe an koordinierende Kationen an der Außenseite der oktaedrischen Oberflächenschicht gebunden ist.

4. Teilchen mit bipolaren topospezifischen Eigenschaften wie in irgendeinem der vorhergehenden Ansprüche beansprucht, wobei koordinierende Kationen auf der Außenseite von jeder der tetraedrischen und der oktaedrischen Oberflächenschichten an die chemische Gruppe gebunden sind, mit der Maßgabe, dass die chemische Gruppe, die an die koordinierenden Kationen an der Außenseite der tetraedrischen Oberflächenschicht gebunden ist, nicht identisch ist mit der chemischen Gruppe, die an die koordinierenden Kationen an der Außenseite der oktaedrischen Oberflächenschicht gebunden ist.

5. Teilchen mit bipolaren topospezifischen Eigenschaften wie in irgendeinem der vorhergehenden Ansprüche beansprucht, wobei die Organoheteryl-Gruppe an die koordinierenden Kationen durch Erfüllung ihrer freien Valenz an ein Atom, ausgewählt aus Sauerstoff, Stickstoff, Schwefel, Phosphor oder Silicium, gebunden ist.

6. Teilchen mit bipolaren topospezifischen Eigenschaften wie in irgendeinem der vorhergehenden Ansprüche beansprucht, wobei die chemische Gruppe ausgewählt ist aus -R, -O-R, -SO₄-R, -N(X₁)-R, -O-PO₃(X₁)-R, -OC(O)-R, -Si(X₁X₂)-R und -O-Si(X₁X₂)-R, wobei -R eine Organyl- oder Organoheteryl-Gruppe ist, X₁ und X₂ ausgewählt sind aus einer Gruppe, bestehend aus H, Phenyl, -(CH₂)ₙ-CH₃, Cl, Br, I oder einer Organyl- oder Organoheteryl-Gruppe, die gleich oder nicht gleich -R sein kann, und n 0 bis 15 ist.

7. Teilchen mit bipolaren topospezifischen Eigenschaften wie in Anspruch 6 beansprucht, wobei die chemische Gruppe mehr als 8 Kohlenstoffatome aufweist.

8. Teilchen mit bipolaren topospezifischen Eigenschaften wie in irgendeinem der vorhergehenden Ansprüche beansprucht, wobei -R -R₁ ist, so dass jedes der Stammmoleküle der Form X₃-R₁ eine Oberflächenenergie im Bereich von 10 bis 60 erg/cm² aufweist, wobei X₃ ausgewählt ist aus H, OH, Phenyl, -CH₃, O-CH₃, Cl, Br oder I.

9. Teilchen mit bipolaren topospezifischen Eigenschaften wie in den Ansprüchen 1 bis 7 beansprucht, wobei -R -R₂ ist, so dass jedes der Stammmoleküle der Form X₃-R₂ einen Wert des Verteilungskoeffizienten oder log D von weniger als oder gleich Null bei einem pH von 7 aufweist, wobei X₃ ausgewählt ist aus H, OH, Phenyl, -CH₃, O-CH₃, Cl, Br oder I.

10. Teilchen mit bipolaren topospezifischen Eigenschaften wie in Anspruch 8 oder Anspruch 9 beansprucht, wobei koordinierende Kationen auf der Außenseite einer der Oberflächenschichten an eine chemische Gruppe gebunden sind, wobei -R -R₁ ist, und koordinierende Kationen an der Außenseite der anderen Oberflächenschicht an eine Gruppe gebunden sind, worin -R -R₂ ist.

11. Teilchen mit bipolaren topospezifischen Eigenschaften wie in irgendeinem der vorhergehenden Ansprüche beansprucht, wobei das Teilchen zwei räumlich getrennte Außenflächen mit unterschiedlichen Oberflächeneigenschaften aufweist.

12. Teilchen mit bipolaren topospezifischen Eigenschaften wie in irgendeinem der vorhergehenden Ansprüche beansprucht, wobei eine der individuellen Außenflächen hydrophil ist und die andere individuelle Außenfläche hydrophob ist.

13. Teilchen mit bipolaren topospezifischen Eigenschaften wie in irgendeinem der vorhergehenden Ansprüche beansprucht, wobei -R -R₃ ist, so dass jedes der Stammmoleküle der Form X₃-R₃ mindestens einen Absorptionspeak in einem polaren oder unpolaren Lösungsmittel bei einer Wellenlänge von 200 nm bis 700 nm aufweist, wobei X₃ ausgewählt ist aus H, OH, Phenyl, -CH₃, O-CH₃, Cl, Br oder I.

14. Teilchen mit bipolaren topospezifischen Eigenschaften wie in irgendeinem der vorhergehenden Ansprüche beansprucht, wobei -R -R₄ ist, so dass jedes der Stammmoleküle der Form X₃-R₄ mindestens einen Emissionspeak in einem polaren oder unpolaren Lösungsmittel bei einer Wellenlänge von 200 nm bis 700 nm aufweist, wobei X₃ ausgewählt ist aus H, OH, Phenyl, -CH₃, O-CH₃, Cl, Br oder I.

15. Teilchen mit bipolaren topospezifischen Eigenschaften wie in irgendeinem der vorhergehenden Ansprüche beansprucht, wobei die koordinierenden Kationen der oktaedrischen Oberflächenschicht an eine Organoheteryl-Gruppe gebunden sind, die C10-C22-Carbonsäure mit freier Valenz am Sauerstoff ist.

16. Teilchen mit bipolaren topospezifischen Eigenschaften wie in irgendeinem der vorhergehenden Ansprüche beansprucht, wobei die koordinierenden Kationen der tetraedrischen Oberflächenschicht an eine Organoheteryl-Gruppe gebunden sind, die Silan mit freier Valenz am Sauerstoff ist.

17. Teilchen mit bipolaren topospezifischen Eigenschaften wie in irgendeinem der vorhergehenden Ansprüche beansprucht, wobei der 1:1 Ton ausgewählt ist aus Kaolinit, Halloysit, Dickit oder Nakrit.

18. Verfahren zur Herstellung eines Teilchens mit bipolaren topospezifischen Eigenschaften nach irgendeinem der vorhergehenden Ansprüche, dessen Vorstufe ein asymmetrisches 1:1 oder 2:1:1 Tonteilchen mit alternierenden tetraedrischen und oktaedrischen Schichten ist, die mit einer tetraedrischen Schicht an einer äußeren Oberflächenebene und mit einer oktaedrischen Schicht an einer anderen äußeren Oberflächenebene enden, umfassend die Schritte:
a. Kontaktieren der Vorstufe mit einer Mineralsäure,
b. Zugabe eines Alkalis, um den pH-Wert auf über 8 zu erhöhen,
c. Zugabe eines Alkalimetallsalzes von C10-C22-Carbonsäure bei einer Temperatur von 50 bis 150 °C,
d. Zugabe einer Mineralsäure, um den pH-Wert auf unter 7 zu senken;
e. Abtrennen des festen Produkts, das das Teilchen mit bipolaren topospezifischen Eigenschaften umfasst.

## Revendications

1. Particule avec des caractéristiques topospécifiques bipolaires, dont un précurseur est une particule d'argile 1:1 ou 2:1:1 asymétrique présentant des feuilles tétraédriques et octaédriques alternées se terminant avec une feuille tétraédrique sur un plan de surface externe et une feuille octaédrique sur un autre plan de surface externe, dans laquelle un groupe chimique, ayant plus de 3 atomes de carbone, et choisi parmi un groupe chimique organyle ou organohétéryle, est fixé aux cations de coordination sur le côté extérieur d'une des feuilles de surface.

2. Particule avec des caractéristiques topospécifiques bipolaires selon la revendication 1 dans laquelle ledit groupe chimique est fixé aux cations de coordination sur le côté extérieur de la feuille de surface tétraédrique.

3. Particule avec des caractéristiques topospécifiques bipolaires selon la revendication 1 dans laquelle ledit groupe chimique est fixé aux cations de coordination sur le côté extérieur de la feuille de surface octaédrique.

4. Particule avec des caractéristiques topospécifiques bipolaires selon l'une quelconque des revendications précédentes dans laquelle des cations de coordination sur le côté extérieur de chacune des feuilles de surface tétraédriques et octaédriques sont fixés audit groupe chimique, à condition que le groupe chimique fixé aux cations de coordination sur le côté extérieur de la feuille de surface tétraédrique ne soit pas identique au groupe chimique fixé aux cations de coordination sur le côté extérieur de la feuille de surface octaédrique.

5. Particule avec des caractéristique topospécifiques bipolaires selon l'une quelconque des revendications précédentes, dans laquelle ledit groupe organohétéryle est fixé auxdits cations de coordination en respectant sa valence libre sur un atome choisi parmi l'oxygène, l'azote, le soufre, le phosphore ou le silicium.

6. Particule avec des caractéristiques topospécifiques bipolaires selon l'une quelconque des revendications précédentes, dans laquelle ledit groupe chimique est choisi parmi -R, -O-R, -SO₄-R,-N(X₁)-R, -O-PO₃(X₁)-R, -O-C(O)-R, -Si(X₁X₂)-R, et -O-Si(X₁X₂)-R, où -R est un groupe organyle ou organohétéryle, X₁ et X₂ sont choisis dans un groupe consistant en H, phényle, -(CH₂)ₙ-CH₃, Cl, Br, I, ou un groupe organyle ou organohétéryle qui peut être ou ne peut pas être identique à -R, et n est de 0 à 15.

7. Particule avec des caractéristiques topospécifiques bipolaires selon la revendication 6, dans laquelle ledit groupe chimique présente plus de 8 atomes de carbone.

8. Particule avec des caractéristiques topospécifiques bipolaires selon l'une quelconque des revendications précédentes, dans laquelle ledit -R est -R₁ de sorte qu'une de la molécule parente de la forme X₃-R₁ présente une énergie de surface dans l'intervalle de 10 à 60 ergs/cm² où X₃ est choisi parmi H, OH, phényle, -CH₃, O-CH₃, Cl, Br ou I.

9. Particule avec des caractéristiques topospécifiques bipolaires selon les revendications 1 à 7, dans laquelle ledit -R est -R₂ de sorte qu'une de la molécule parente de la forme X₃-R₂ présente une valeur de coefficient de distribution ou log D inférieure ou égale à zéro à pH 7 où X₃ est choisi parmi H, OH, phényle, -CH₃, O-CH₃, Cl, Br ou I.

10. Particule avec des caractéristiques topospécifiques bipolaires selon la revendication 8 ou la revendication 9, dans laquelle des cations de coordination sur le côté extérieur d'une des feuilles de surface sont fixés à un groupe chimique où -R est -R₁ et des cations de coordination sur le côté extérieur de l'autre feuille de surface sont fixés à un groupe où -R est -R₂.

11. Particule avec des caractéristiques topospécifiques bipolaires selon l'une quelconque des revendications précédentes, dans laquelle ladite particule présente deux faces extérieures spatialement distinctes présentant des caractéristiques de surface distinctes.

12. Particule avec des caractéristiques topospécifiques bipolaires selon l'une quelconque des revendications précédentes, dans laquelle une desdites faces extérieures distinctes est hydrophile et l'autre face extérieure distincte est hydrophobe.

13. Particule avec des caractéristiques topospécifiques bipolaires selon l'une quelconque des revendications précédentes, dans laquelle ledit -R est -R₃ de sorte qu'une de la molécule parente de la forme X₃-R₃ présente au moins un pic d'absorption dans un solvant polaire ou non-polaire à une longueur d'onde de 200 nm à 700 nm, où X₃ est choisi parmi H, OH, phényle, -CH₃, O-CH₃, Cl, Br ou I.

14. Particule avec des caractéristiques topospécifiques bipolaires selon l'une quelconque des revendications précédentes, dans laquelle ledit -R est -R₄ de sorte qu'une de la molécule parente de la forme X₃-R₄ présente au moins un pic d'émission dans un solvant polaire ou non-polaire à une longueur d'onde de 200 nm à 700 nm, où X₃ est choisi parmi H, OH, phényle, -CH₃, O-CH₃, Cl, Br ou I.

15. Particule avec des caractéristiques topospécifiques bipolaires selon l'une quelconque des revendications précédentes, dans laquelle lesdits cations de coordination de feuille de surface octaédrique sont fixés à un groupe organohétéryle qui est un acide carboxylique en C10-C22 avec une valence libre sur l'oxygène.

16. Particule avec des caractéristique topospécifiques bipolaires selon l'une quelconque des revendications précédentes, dans laquelle lesdits cations de coordination de feuille de surface tétraédrique sont fixés à un groupe organohétéryle qui est un silane avec une valence libre sur l'oxygène.

17. Particule avec des caractéristiques topospécifiques bipolaires selon l'une quelconque des revendications précédentes, dans laquelle ledit argile 1:1 est choisi parmi la kaolinite, l'halloysite, la dickite, ou la nacrite.

18. Procédé de préparation d'une particule avec des caractéristiques topospécifiques bipolaires selon l'une quelconque des revendications précédentes, dont le précurseur est une particule d'argile 1:1 ou 2:1:1 asymétrique présentant des feuilles tétraédriques et octaédriques alternées se terminant avec une feuille tétraédrique sur un plan de surface externe et une feuille octaédrique sur un autre plan de surface externe, comprenant les étapes de :
a. mise en contact du précurseur avec un acide minéral,
b. addition d'un alcali pour augmenter le pH au-dessus de 8,
c. addition d'un sel de métal alcalin d'acide carboxylique en C10-C22 à une température de 50 à 150°C,
d. addition d'un acide minéral pour réduire le pH en-dessous de 7, et ;
e. séparation du produit solide comprenant la particule avec des caractéristiques topospécifiques bipolaires.
